## Europäisches Patentamt

## European Patent Office

## Office européen des brevets

(19)

(11) Veröffentlichungsnummer : **0 131 189**
**B1**

(12)

# EUROPÄISCHE PATENTSCHRIFT

(45) Veröffentlichungstag der Patentschrift :
19.08.87

(21) Anmeldenummer : 84107256.4

(22) Anmeldetag : 25.06.84

(51) Int. Cl.⁴ : **C 08 G 75/00, C 08 G 79/00, H 01 B 1/12**

(54) Verfahren zur Herstellung elektrisch leitfähiger Polymere.

(30) Priorität : 08.07.83 DE 3324768

(43) Veröffentlichungstag der Anmeldung :
16.01.85 Patentblatt 85/03

(45) Bekanntmachung des Hinweises auf die Patenterteilung : 19.08.87 Patentblatt 87/34

(84) Benannte Vertragsstaaten :
CH DE FR GB IT LI NL

(56) Entgegenhaltungen :
EP-A- 0 039 829
US-A- 3 268 504
US-A- 3 354 129
US-A- 3 671 467
US-A- 4 375 427

(73) Patentinhaber : BAYER AG
Konzernverwaltung RP Patentabteilung
D-5090 Leverkusen 1 Bayerwerk (DE)

(72) Erfinder : Fischer, Wolfgang, Dr.
Breslauer Strasse 15
D-4005 Meerbusch 3 (DE)
Erfinder : Hocker, Jürgen, Dr.
Eichenweg 6
D-5060 Bergisch-Gladbach 2 (DE)
Erfinder : von Gizycki, Ulrich, Dr.
Wiembachallee 24
D-5090 Leverkusen 3 (DE)
Erfinder : Herzog, Helmut, Dr.
Am Benthal 22
D-5090 Leverkusen 31 (DE)

EP 0 131 189 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung ist ein Verfahren zur Herstellung elektrisch leitfähiger Polymerer, das dadurch gekennzeichnet ist, daß man in einer ersten Stufe einen Polyaromaten, enthaltend 2 bis 9 carbocyclische Ringe und gegebenenfalls 1 bis 3 heterocyclische Ringe mit O, S oder N als Heteroatom, bei 80 bis 400 °C mit 0,5 bis 100 Mol Schwefel, einem schwefelspendenden Agens, bevorzugt Metallpolysulfid oder Schwefelhalogeniden, Selen oder Mischungen davon umsetzt und in einer zweiten Stufe das hochmolekulare Reaktionsprodukt zur Erzeugung einer p-Leitfähigkeit oxidiert oder zur Erzeugung einer n-Leitfähigkeit reduziert. Bevorzugt wird es mit einem Überschuß an gasförmigem $AsF_5$ oder Iod oder mit in einem organischen Lösungsmittel gelösten $FeCl_3$ bei — 100 bis + 350 °C behandelt.

Die erfindungsgemäßen Aromaten können durch aliphatische Reste oder Heteroatome überbrückt sein und Substituenten tragen, z. B. Alkyl-, Aryl-, Carbonyl-, Carboxyl-, Sulfonyl- oder Halogenreste sowie die Hydroxyl-, Cyano-, Nitro- und Aminogruppen. Sie können jeder für sich oder als Gemische eingesetzt . werden.

Es ist bekannt, daß durch gemeinsames Erhitzen von elementarem Schwefel oder Selen mit mehrkernigen, polykondensierten Aromaten durch Dehydrierungsreaktionen Polymere entstehen (FR-PS 776 146 ; J. Polym. Sci. Polym. Chem. Ed. 20 (1982), S. 1119 - 1132). Substituierte Aromaten und Monomere aus aromatischen und chinoiden Systemen werden nach dem sog. Backschmelz- oder Kochschmelzverfahren zu höhermolekularen Farbstoffen umgesetzt (Ullmann's Enzyklopädie der technischen Chemie, 4. Aufl. 21, 60 ff). Es entstehen im allgemeinen harzartige, ölige oder amorphe Produkte von verschiedenem Molekulargewicht, bei denen die Ausgangsverbindungen entweder durch Thioether- oder Disulfidbrücken oder durch 5- oder 6-gliedrige heterocyclische Ringe miteinander verknüpft sind.

Verbindungen dieser Art werden als Küpenfarbstoffe verwendet, d. h. sie können zu löslichen Verbindungen reduziert werden und durch Oxidation wieder gefällt und auf einem Substrat fixiert werden.

Gemäß der europäischen Patentanmeldung 31 444 hat man bestimmte Phenylen- und Naphthylenreste enthaltende Polymere z. B. Poly-p-phenylensulfid durch gezielte Oxidation oder Reduktion in den elektrisch leitfähigen Zustand übergeführt. Hierbei geht man jedoch von definierten Polymeren aus, die häufig nur schwer zugänglich sind.

Gemäß der Erfindung werden nun in einfacher Weise aus Schwefel oder Selen enthaltenden aromatischen Polymeren weitgehend unbekannter Feinstruktur elektrisch leitende Produkte hergestellt. In der ersten Stufe des erfindungsgemäßen Verfahrens wird in an sich bekannter Weise ein Aromat mit elementarem Schwefel oder Selen oder mit einem Polysulfid in Abwesenheit (Backschmelze) oder Anwesenheit (Kochschmelze) eines Lösungsmittels bei erhöhter Temperatur umgesetzt. Es erwies sich hierbei, daß gerade die leicht zugänglichen, polykondensierten Aromaten, wie Chrysen, Pyren und leicht zugängliche Heteroaromaten, wie Carbazol als Monomere sehr gut geeignet sind. Die in dieser einstufigen Reaktion erhaltenen höhermolekularen Verbindungen werden in der zweiten Stufe in ebenfalls an sich bekannter Weise dotiert, d. h. mit gewissen Oxidationsmitteln in p-Halbleiter oder mit gewissen Reduktionsmitteln in n-Halbleiter übergeführt. Die elektrische Leitfähigkeit steigt dabei um mehrere Zehner-Potenzen an. Viele der erfindungsgemäß erhaltenen dotierten Polymeren sind verarbeitbar aus der Schmelze oder aus der Lösung. Einige allerdings erst nach vorgeschalteter Reduktion.

Im folgenden wird das erfindungsgemäße Verfahren genauer beschrieben :

Im ersten Reaktionsschritt werden polykondensierte aromatische Bausteine mittels Schwefel oder Selen verknüpft. Diese polykondensierten, aromatischen Bausteine können zusammengesetzt sein aus kondensierten Benzokernen, z. B. Anthracen, Chrysen, Pyren (Acentypen), diese können wiederum direkt, über Alkylengruppen oder über Imino-, Carbonyl-, Thio-, Oxo-, Disulfid- und Sulfongruppen mit weiteren aromatischen Einheiten verknüpft sein, z. B. Fluoranthen, Fluoren, Diphenylsulfon, sie können überbrückt sein durch Alkylenreste, z. B. Acenaphthen, chinoide Systeme enthalten, z. B. Anthron, Anthrachinon, Benzanthron oder heterocyclische Ringe enthalten, z. B. Carbazol, Dibenzofuran, Dibenzothiophen, und durch Alkyl-, Carbonyl-, Carboxyl- und/oder Sulfonylgruppen substituiert sein. Diese aromatischen Bausteine können je für sich oder in Kombination miteinander eingesetzt werden. Ihre Verknüpfung mittels Schwefel oder Selen findet bevorzugt in der Schmelze statt. Dazu werden Schwefel, schwefelspendende Agentien, Selen oder Mischungen daraus — im folgenden « Chalkogen » genannt — mit dem Aromat vermischt und erhitzt.

Die Menge an « Chalkogen » kann 100 Mol bis 0,5 Mol pro Mol des Aromaten betragen, bevorzugt ist 1 bis 10 Mol « Chalkogen » pro Mol Aromat. Die Reaktionstemperatur ist an der Reaktivität und der Flüchtigkeit der aromatischen Verbindung zu orientieren. Man kann bei Temperaturen von 80 bis 400 °C arbeiten, bevorzugt bei 180 bis 360 °C für Schwefel, bei 300 bis 360 °C für Selen.

Schwefelspendende Agentien im Sinne der Erfindung sind insbesondere Metallpolysulfid und Schwefelhalogenid wie Natriumpolysulfid, Kaliumpolysulfid, Calciumpolysulfid, Dischwefeldichlorid.

Die Reaktionszeit kann von 15 Min. bis 5 Tagen betragen. Bevorzugt sind Reaktionszeiten von 4 bis 45 h. Für Reaktionen mit Schwefel werden insbesondere bevorzugt Zeiten zwischen 5 und 20 h.

Extreme Reaktionsbedingungen, hohe Temperatur und lange Reaktionszeiten führen im allgemeinen zu hochvernetzten, nicht mehr verarbeitbaren Produkten.

Die Reaktion kann unter Schutzgas durchgeführt werden, was sich besonders bei hohen Reaktionstemperaturen empfiehlt.

Gegebenenfalls kann die Reaktion auch in Anwesenheit eines Lösungsmittels durchgeführt werden. Prinzipiell sind dabei alle gegenüber Schwefel, schwefelspendendem Agens und Selen und gegenüber dem aromatischen Reaktionspartner unter den Reaktionsbedingungen inerten Lösungsmittel geeignet. Verwendbare Lösungsmittel sind aliphatische und aromatische Kohlenwasserstoffe, fluorierte und chlorierte Kohlenwasserstoffe, Wasser, Mono- und Oligoalkanole, Ether, bevorzugt Glykolether, Dimethylformamid, N-Methylpyrrolidon sowie aliphatische Sulfide, Sulfoxide und Sulfone.

In Anwesenheit eines Lösungsmittels kann die Reaktionstemperatur bis zu 300 °C betragen, bevorzugt ist ein Bereich von 50 bis 250 °C, insbesondere der Bereich von 80 bis 200 °C. Gegebenenfalls muß die Reaktionstemperatur durch Druckerhöhung aufrechterhalten werden.

Die Reaktionszeit der in Lösung stattfindenden Reaktion beträgt 1 bis 50 h, bevorzugt ist der Bereich von 1 bis 10 h.

Zur Beschleunigung der Reaktion können gegebenenfalls geringe Mengen katalytisch wirksamer Substanzen wie Metalle, Metallsalze, Metalloxide, Metallhydroxide oder Iod zugegeben werden.

Die in der ersten Reaktionsstufe erhaltenen Produkte können direkt weiterverarbeitet werden. Gegebenenfalls kann auch nicht gebundener Schwefel vorher entfernt werden. Dies ist bevorzugt durch Extraktion mit Toluol möglich.

In der zweiten Reaktionsstufe wird die elektrische Leitfähigkeit der hergestellten Produkte um mehrere Größenordnungen erhöht. Dies geschieht durch Behandlung mit geeigneten Zusatzstoffen (Dotierung). Möglich ist eine p- und n-Dotierung. Zur p-Dotierung verwendet man Elektronenakzeptoren wie Oxidationsmittel, Brönsted-Säuren und Lewis-Säuren. Geeignet sind folgende Substanzen : Halogene und Interhalogenverbindungen, wie z. B. $Cl_2$, $Br_2$, $I_2$, ICl, IBr, Halogenverbindungen, wie z. B. $AsF_5$, $SbF_5$, $SbCl_5$, $AsCl_5$, $PF_5$, $POF_3$, Salze des dreiwertigen Eisens, wie z. B. $FeF_3$, $FeCl_3$, $FeBr_3$, $Fe(ClO_4)_3$, Salze des dreiwertigen Cobalts, Oxide wie z. B. NO, $NO_2$. Protonsäuren, wie z. B. $H_2SO_4$, $HClO_4$, $HNO_3$, Sulfonsäuren, sowie Sauerstoff, Ozon und Peroxyverbindungen.

Zur n-Dotierung verwendet man Elektronendonatoren wie starke Reduktionsmittel, z. B. Alkalimetalle, Erdalkalimetalle, deren Naphthalide, wie Na-, K-Naphthalide, deren Amide oder auch Amine. Die p- und n-Dotierung kann auch elektrochemisch durchgeführt werden.

Die Dotierung kann dadurch erfolgen, daß man das Dotierungsmittel gasförmig auf die erfindungsgemäßen höhermolekularen organischen Verbindungen einwirken läßt, daß man das Dotierungsmittel suspendiert oder gelöst in einem inerten Lösungsmittel direkt zum erfindungsgemäßen Polymer gibt, daß man das Dotierungsmittel zu einer Lösung oder Suspension des Polymers gibt und daß man eine Lösung oder Suspension des Dotierungsmittels zu einer Lösung oder Suspension des Polymers gibt.

Bei festen Dotierungsmitteln kann die Dotierung auch durch Verschmelzen von Dotierungsmitteln mit dem organischen Polymer erfolgen.

Die Dotierung kann in einem Temperaturbereich von — 100 °C bis + 350 °C erfolgen, vorzugsweise zwischen — 50 und + 200 °C, insbesondere zwischen 0 und 100 °C.

Der Dotierungsgrad, d. i. die Menge Dotierungsmittel, die mit dem Polymer reagiert hat oder von ihm absorbiert wurde, hat einen Einfluß auf die elektrische Leitfähigkeit und kann von 0,01 Gew.-% bis 250 Gew.-%, bezogen auf das Polymer betragen. Bevorzugt ist ein Bereich von 0,1 bis 150 Gew.-%, insbesondere der Bereich von 1 Gew.-% bis 100 Gew.-%, bezogen auf das Polymer.

Die Dotierungszeit kann von wenigen Sekunden bis zu mehreren Tagen betragen. Bevorzugt ist eine Zeitspanne von 10 min bis 48 h, insbesondere von 1 h bis 24 h.

Die erfindungsgemäßen elektrisch leitfähigen organischen Verbindungen können Verwendung finden in Batterien, in Solarzellen, als Photoleiter, als elektrische Leiter oder Halbleiter in elektronischen Bausteinen sowie zur Antistatikausrüstung von Kunststoffen.

## Beispiel 1

### Kochschmelze

In einen 500 ml Vierhalskolben, der mit Kühler, Teflonrührer, Thermometer und Gasableitung versehen ist, gibt man 50 ml Triethylenglykol, 45 g $Na_2S.3H_2O$ und 20 g Schwefelblüte.

Man erhitzt auf 120 °C und trägt innerhalb von 15 Minuten 10 g Diphenylsulfon ein. Man hält 3 Stunden bei 130 °C und erhitzt dann unter Abdestillieren von Wasser auf 190 bis 200 °C. Man hält das Reaktionsgemisch 20 Stunden bei 190 bis 200 °C. Durch tropfenweise Zugabe von 200 ml Wasser wird die Temperatur auf 100 °C gesenkt. Man hält 1 Stunde bei 100 °C und gießt das Reaktionsgemisch in eine Mischung aus 500 ml destilliertem Wasser und 150 ml 40 %iger Bisulfitlösung. Man stellt mit ca. 70 ml konz. Salzsäure einen pH-Wert von 1 bis 2 ein, saugt vom Niederschlag ab und wäscht mit Wasser neutral. Nach Trocknen bei 100 °C wird der Niederschlag (26,2 g) in der 10-fachen Menge Toluol 15 Minuten zum Rückfluß erhitzt, heiß abfiltriert und mit heißem Toluol nachgewaschen. Nach Trocknen bei 100 °C erhält man 7,5 g eines schwarzen Pulvers. S-Gehalt : 68,4 %.

Spez. Leitfähigkeit : $1,6 \times 10^{-10}$ S/cm.

Dotierung mit AsF$_5$:

100 mg des geschwefelten Diphenylsulfons werden in ein evakuiertes Gefäß mit 200 ml Inhalt gebracht, in das man AsF$_5$ einströmen läßt, bis ein Druck von 500 mbar erreicht ist. Nach 24 Stunden wird das Gefäß mehrmals mit Stickstoff gespült, die Probe in einer Glove-Box entnommen und zu einer Pille gepreßt.

Die spez. Leitfähigkeit dieser Pille beträgt 5 × 10$^{-6}$ S/cm (2-Elektrodenmessung).

Dotierung mit FeCl$_3$:

100 mg des geschwefelten Diphenylsulfons werden in einer Lösung aus 500 mg wasserfreiem FeCl$_3$ in 50 ml absolutem Acetonitril suspendiert. Nach 24 Stunden wird unter Ausschluß von Feuchtigkeit abfiltriert und mit Acetonitril nachgewaschen.

Man preßt das Pulver zu einer Pille, die eine spez. Leitfähigkeit von 1,2 × 10$^{-4}$ S/cm zeigt (2-Elektrodenmessung).

Beispiel 2

Backschmelze

In einen 250 ml Planschliffbecher mit Ankerrührer, Luftkühler, Gasableitung und Thermometer gibt man 30 g Fluoren, 100 g gemahlenen Schwefel sowie 0,3 g Iod.

Man erhitzt innerhalb 1 Stunde auf 250 bis 260 °C und hält 8 Stunden bei dieser Temperatur, wobei nach 5 Stunden der Rührer abgestellt wird.

Das Reaktionsgemisch wird gemahlen und mit der 10-fachen Menge Toluol ausgekocht. Man erhält 25,1 g einer metallisch glänzenden Substanz mit einem Schwefelgehalt von 31 % und einer spez. Leitfähigkeit von 3 × 10$^{-5}$ S/cm. Durch Gasphasendotierung mit Iod steigt die spez. Leitfähigkeit auf 8,5 × 10$^{-3}$ S/cm an.

Beispiel 3

Analog Beispiel 2 werden 30 g Anthron, 100 g gemahlener Schwefel und 0,3 g Iod 8 Stunden auf 250 °C erhitzt. Nach Auskochen mit Toluol erhält man 42,7 g einer schwarzen, unlöslichen Substanz mit einem Schwefelgehalt von 31,0 % und einer spez. Leitfähigkeit von 2,7 × 10$^{-6}$ S/cm. Durch Gasphasendotierung mit Iod steigt die spez. Leitfähigkeit auf 8 × 10$^{-5}$ S/cm an.

Beispiel 4

Analog Beispiel 2 werden 20 g eines Gemisches aus 55 % Anthracen, 40 % Phenanthren und 5 % Acenaphthen innerhalb 3 Stunden auf 260 °C erhitzt. Man hält 6 Stunden bei 260 bis 270 °C, läßt abkühlen und arbeitet wie in Beispiel 2 auf. Nach dem Auskochen mit Toluol erhält man 38,5 g eines dunklen Pulvers mit einem Schwefelgehalt von 49,3 % und einer spez. Leitfähigkeit von 7,3 × 10$^{-8}$ S/cm. Die Dotierung nach Beispiel 1 liefert Halbleiter.

Dotierung mit AsF$_5$: δ = 7,2 × 10$^{-6}$ S/cm
Dotierung mit FeCl$_3$: δ = 1,2 × 10$^{-4}$ S/cm
Dotierung mit I$_2$: δ = 2,5 × 10$^{-4}$ S/cm.

Beispiele 5-12

Umsetzung von kondensierten Aromaten mit Schwefel.

Die aromatische Verbindung wird analog Beispiel 2 mit elementarem Schwefel innig vermischt und auf 350 °C unter Stickstoffatmosphäre erhitzt. Nach dem Erkalten erstarrt die Masse zu einem schwarzen, amorphen Feststoff. Überschüssiger Schwefel wird mit Toluol extrahiert.

| Bsp. | Aromat | g | Schwefel g | Reaktions- zeit h | S-Gehalt Polymer % |
|------|--------|------|------|------|------|
| 5 | Pyren | 50 | 12,5 | 5 | 18,3 |
| 6 | Fluoranthen | 50 | 12,5 | 10 | 13,7 |
| 7 | Chrysen | 50 | 10 | 10 | 13,7 |
| 8 | 2-Methyl- anthrachinon | 10 | 30 | 4 | 24,0 |

4

(Fortsetzung)

| Bsp. | Aromat | g | Schwefel g | Reaktions-zeit h | S-Gehalt Polymer % |
|------|--------|---|-----------|------------------|---------------------|
| 9 | Isoviolan-thron | 15 | 1,6 | 16 | 4,8 |
| 10 | Acenaphthen | 20 | 50 | 8 | 46,7 |
| 11 | Carbazol | 20 | 100 | 6 | 63,1 |
| 12 | Benzanthron | 20 | 100 | 6 | 46,7 |

Spezifische Leitfähigkeiten in S/cm :

| Bsp. | undotiert | $\frac{I}{2}$-dotiert | $AsF_5$-dotiert | $FeCl_3$-dotiert |
|------|-----------|-----------------------|-----------------|------------------|
| 5 | $1,7 \times 10^{-15}$ | $2,8 \times 10^{-4}$ | $6,1 \times 10^{-5}$ | – |
| 6 | $6,9 \times 10^{-14}$ | $2,7 \times 10^{-5}$ | $1,1 \times 10^{-1}$ | $1,1 \times 10^{-7}$ |
| 7 | $3,7 \times 10^{-13}$ | $2,0 \times 10^{-4}$ | $2,4 \times 10^{-3}$ | $1,5 \times 10^{-5*)}$ |
| 8 | $4,1 \times 10^{-9}$ | – | $6,7 \times 10^{-7}$ | – |
| 9 | $1,2 \times 10^{-7}$ | $2,2 \times 10^{-8}$ | $3,1 \times 10^{-6}$ | $4,4 \times 10^{-4}$ |
| 10 | $8,8 \times 10^{-11}$ | $8,5 \times 10^{-8}$ | $4,7 \times 10^{-5}$ | $4,1 \times 10^{-6}$ |
| 11 | $3,1 \times 10^{-15}$ | $5,5 \times 10^{-14}$ | $9,8 \times 10^{-7}$ | $4,3 \times 10^{-7}$ |
| 12 | $1,3 \times 10^{-8}$ | $1,2 \times 10^{-6}$ | $7,0 \times 10^{-5}$ | – |

*) in Nitromethan dotiert

## Beispiel 13

Umsetzung von Aromat mit elementarem Selen.

Fluoranthen (10 g) und Selen (5,5 g) werden innig vermischt und auf 350 °C unter Stickstoffatmosphäre erhitzt. Es wird $H_2Se$-Abspaltung beobachtet. Nach 50 h Reaktionszeit läßt man abkühlen und erhält einen schwarzen amorphen Feststoff.

Spez. Leitfähigkeit : $9,9 \times 10^{-8}$ S/cm.

Durch Iod-Dotierung steigt die spez. Leitfähigkeit auf $2,6 \times 10^{-5}$ S/cm an.

$FeCl_3$-Dotierung liefert ein Produkt mit einer spez. Leitfähigkeit von $6,4 \times 10^{-6}$ S/cm.

Durch $AsF_5$-Dotierung läßt sich die Leitfähigkeit bis $1,6 \times 10^{-2}$ S/cm steigern.

## Patentansprüche

1. Verfahren zur Herstellung elektrisch leitfähiger Polymerer, dadurch gekennzeichnet, daß man in einer ersten Stufe einen gegebenenfalls mit Alkyl-, Carbonyl-, Carboxyl- und/oder Sulfonylgruppen substituierten Aromaten enthaltend 2 bis 9 carbocyclische Ringe und gegebenenfalls 1 bis 3 heterocyclische Ringe mit O, S oder N als Heteroatom bei 80 bis 400 °C im molaren Verhältnis von 1 zu 0,5 bis 100 mit Schwefel, einer entsprechenden Menge eines schwefelspendenden Agens, Selen oder Mischungen davon umsetzt und in einer zweiten Stufe das hochmolekulare Reaktionsprodukt zur Erzeugung einer p-Leitfähigkeit oxidiert oder zur Erzeugung einer n-Leitfähigkeit reduziert.

2. Verfahren nach Anspruch 1, dadurch gekennzeichnet, daß man das hochmolekulare Reaktionsprodukt mit einem Überschuß an gasförmigem $AsF_5$ oder Iod oder mit in einem organischen Lösungsmittel gelöstem $FeCl_3$ bei — 100 bis + 350 °C behandelt.

3. Elektrisch leitfähige Polymere erhältlich nach dem Verfahren der Ansprüche 1 und 2.

## Claims

1. Process for the production of electrically conductive polymers, characterised in that, in a first stage, an aromatic compound which contains 2 to 9 carbocyclic rings and optionally 1 to 3 heterocyclic rings containing O, S or N as the heteroatom and is optionally substituted with alkyl, carbonyl, carboxyl and/or sulphonyl groups, is reacted at 80 to 400 °C in a molar ratio of 1 to 0.5 to 100 with sulphur, a corresponding quantity of a sulphur-donating agent, selenium or mixtures thereof and in a second stage the high molecular weight reaction product is oxidised to produce p-conductivity or reduced to produce n-conductivity.

2. Process according to Claim 1, characterised in that the high molecular weight reaction product is treated at — 100 to + 350 °C with an excess of gaseous $AsF_5$ or iodine or with $FeCl_3$ dissolved in an organic solvent.

3. Electrically conductive polymers obtainable by the process of Claims 1 and 2.


**Revendications**

1. Procédé de préparation de polymères conducteurs de l'électricité, caractérisé en ce que, dans un premier stade opératoire, on fait réagir un composé aromatique contenant 2 à 9 noyaux carbocycliques et le cas échéant 1 à 3 noyaux hétérocycliques dont les hétéroatomes sont O, S ou N, et éventuellement substitué par des groupes alkyle, carbonyle, carboxyle et/ou sulfonyle, à des températures de 80 à 400 °C, dans un rapport molaire de 1 : 0,5 à 100, avec le soufre, une quantité correspondante d'un agent fournissant du soufre, le sélénium ou des mélanges de ces corps, et dans un deuxième stade opératoire, on oxyde le produit de réaction à haut poids moléculaire afin de parvenir à une conductivité p ou on le réduit afin de parvenir à une conductivité n.

2. Procédé selon la revendication 1, caractérisé en ce que l'on traite le produit de réaction à haut poids moléculaire par un excès d'$AsF_5$ ou d'iode gazeux ou par $FeCl_3$ en solution dans un solvant organique à des températures allant de — 100 jusqu'à + 350 °C.

3. Polymères conducteurs de l'électricité, obtenus par le procédé des revendications 1 et 2.